(19)
Europäisches Patentamt
European Patent Office
Office européen des brevets

(11) Numéro de publication: **0 196 976**
**A1**

(12) **DEMANDE DE BREVET EUROPEEN**

(21) Numéro de dépôt: **86400697.8**

(51) Int. Cl.⁴: **A 01 G 7/04**

(22) Date de dépôt: **28.03.86**

(30) Priorité: **29.03.85 FR 8504790**

(43) Date de publication de la demande: **08.10.86 Bulletin 86/41**

(84) Etats contractants désignés: **BE DE GB NL**

(71) Demandeur: **Genoud, Hubert**
**34, rue de la Sous-Préfecture**
**F-02100 Saint Quentin(FR)**

(72) Inventeur: **Genoud, Hubert**
**34, rue de la Sous-Préfecture**
**F-02100 Saint Quentin(FR)**

(74) Mandataire: **Rataboul, Michel**
**Cabinet Michel Rataboul 69, rue de Richelieu**
**F-75002 Paris(FR)**

(54) **Récipient pour la culture de végétaux.**

(57) L'invention concerne le traitement de végétaux plantés non en pleine terre mais dans une motte de terre placée dans un récipient tel qu'un pot 1-2.

Le récipient conforme à l'invention est caractérisé en ce qu'il est imperméable et associé à au moins un aimant permanent 4 placé sur le fond 2, sans contact avec la paroi latérale 1.

FIG.1

0196976

# RECIPIENT POUR LA CULTURE DE VEGETAUX

On a déjà constaté depuis fort longtemps que le magnétisme avait un effet sur les organismes vivants et notamment sur les plantes.

On sait, par ailleurs, que la Terre développe un champ magnétique dont certaines études menées en particulier au Japon ont montré l'importance sur l'équilibre des êtres vivants.

Ces mêmes études ont montré que le champ magnétique terrestre a subi des modifications importantes depuis plusieurs siècles, et ce phénomène pourrait être l'explication de certaines carences constatées tant chez l'homme que chez certains animaux et plantes d'intérieur.

Lorsque des végétaux sont plantés en pleine terre, ils subissent, évidemment, le champ magnétique terrestre de la manière la plus directe qui soit.

Lorsqu'au contraire, ces végétaux sont plantés dans des récipients tels que des pots, c'est généralement pour les placer dans des bâtiments : appartements, maisons, balcons, etc. et ils sont d'autant plus isolés de l'action du champ magnétique terrestre que les récipients dans lesquels ils sont plantés sont réalisés en un matériau amagnétique : terre cuite, céramique.

La présente invention permet de remédier aux inconvénients ci-dessus en prévoyant des moyens permettant de soumettre des végétaux à un champ magnétique permanent quel que soit l'emplacement auquel on les destine.

A cette fin, l'invention a pour objet un récipient pour la culture de végétaux du type comprenant d'une part un fond traversé par un trou de drainage et d'autre part au moins une paroi latérale fermée sur elle-même, réalisé en un matériau de type magnétique tel que l'acier, la fonte et analogue, caractérisé en ce qu'il est imperméable et est associé à au moins un aimant permanent placé sur le fond et sans contact avec la ou les paroi(s) latérale(s).

Selon d'autres caractéristiques de l'invention :

- le récipient est de couleur sombre, notamment noire, pour favoriser l'absorption et la rétention de chaleur;

- l'aimant est torique et placé sur le fond du récipient de telle manière que le passage central du tore soit en regard du trou de drainage;

- le récipient est associé à deux aimants au moins qui sont placés près du centre du fond mais à l'extérieur du contour du trou de drainage;

- le récipient comporte au moins un logement pour un aimant;

- le fond comporte des reliefs sur lesquels un aimant au moins doit être posé pour se trouver un peu au-dessus du fond.

D'autres caractéristiques de l'invention ressortiront de la description détaillée ci-après faite en référence au dessin annexé. Bien entendu, la description et le dessin ne sont donnés qu'à titre d'exemple indicatif et non limitatif.

La figure 1 est une vue schématique en coupe d'un récipient conforme à l'invention du genre pot de fleurs c'est-à-dire à paroi latérale tronconique et relativement étroit.

La figure 2 est une vue schématique en coupe d'un récipient conforme à l'invention du genre bac, c'est-à-dire relativement large.

La figure 3 montre des courbes donnant la variation de l'amplitude du champ magnétique résultant en fonction de la hauteur d'un point donné par rapport au fond d'un récipient conforme à l'invention.

La figure 4 est une vue schématique en plan d'un récipient conforme à l'invention du même type que celui de la figure 1.

La figure 5 est une vue schématique en coupe d'un récipient conforme à l'invention réalisé selon une variante particulière.

La figure 6 est une vue en plan de ce même récipient.

La figure 7 est une vue en coupe d'un récipient conforme à l'invention réalisé selon une autre variante.

La figure 8 est une vue en plan de ce même récipient.

La figure 9 est une vue schématique partielle montrant une autre variante de réalisation de l'invention.

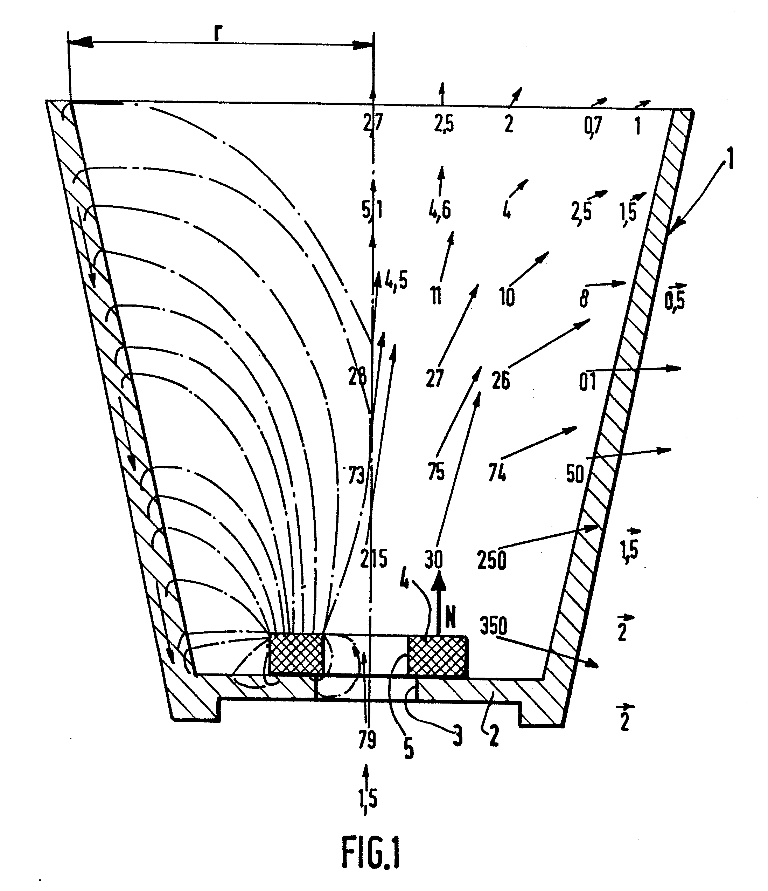

En se reportant à la figure 1, on voit un récipient conforme à l'invention réalisé dans un matériau ferromagnétique tel que la fonte et sous forme tronconique qui est celle, classique, des pots de fleurs.

Le récipient comporte une paroi fermée sur elle-même 1 et un fond 2 dans lequel est prévu un trou central 3 pour le drainage de l'eau d'arrosage excédentaire lorsque l'on arrose la motte de terre placée dans le récipient pour nourrir les végétaux qui y sont plantés.

Sur le fond 2, en son centre, on place un aimant 4 qui a la forme d'un tore, c'est-à-dire qu'il présente un passage central 5 devant être situé en regard du trou de drainage 3 afin de permettre le passage de l'eau excédentaire depuis l'intérieur de la motte jusque sous le fond 2.

Ce pot est réalisé en un matériau imperméable pour éviter l'évaporation de l'eau à travers ses parois, matériau qui doit en outre avoir des propriétés ferromagnétiques : acier, tôle, fonte etc.

La fonte est un matériau qui répond à ces prescriptions et qui présente, en outre, l'avantage d'avoir une masse volumique importante grâce à laquelle, à volume égal, un tel récipient est plus lourd que ceux qui sont actuellement réalisés à base de terre, en sorte qu'il peut être utilisé chaque fois que l'on souhaite une grande stabilité car celle-ci dépend directement du poids du récipient.

Cette stabilité est intéressante par exemple lorsque les végétaux qui sont plantés sont très volumineux et exercent un effort tendant au basculement du récipient ou lorsque l'emplacement est exposé aux intempéries et au vent.

Sur la partie gauche de la figure 1 on a représenté la manière dont s'étendent les lignes de force du champ magnétique et sur la partie droite on a représenté des vecteurs sensiblement tengeants aux lignes de force et associés à un nombre qui est la valeur en Gauss du module du champ magnétique résultant, c'est-à-dire issue de mesures respectivement horizontale et verticale du champ magnétique en chaque point.

Cette figure montre le résultat des observations effectuées à l'occasion d'études et d'essais.

Afin d'effectuer des comparaisons significatives, on a placé un aimant 4 dans un pot de fleurs en terre traditionnelle et ce matériau étant amagnétique, on a pu observer que les lignes de champ se referment à l'extérieur du pot et qu'elles se répartissent en volume, à la limite, comme si le pot n'existait pas.

Dans le cas d'un pot en fonte, tel que celui représenté sur la figure 1, au contraire, les lignes de champ se trouvent "piégées" par la fonte qui constitue la paroi 1 et sont canalisées comme on l'indique par les flèches, pour fermer le champ par la face sud de l'aimant 4 placé contre le fond 2.

Il en résulte que le champ magnétique est absolument enfermé à l'intérieur du récipient et dans la masse proprement dite de celui-ci, la valeur du champ magnétique à l'extérieur du récipient étant nulle ou quasi nulle. On a observé, également, que le champ magnétique est plus intense dans un pot en fonte que dans un pot en terre, cela étant dû à la valeur plus grande de la composante horizontale.

En effet, les lignes de champ tendent à emprunter rapidement le trajet le moins réluctant offert par les parois métalliques du pot et, de ce fait, elles sont moins inclinées sur l'horizontale que dans le pot en terre.

On décrit, plus loin, les résulats obtenus sur les végétaux plantés dans une motte de terre placée dans un récipient conforme à l'invention mais, d'ores et déjà, il est important de souligner cet effet, imprévisible car il n'est pas évident, à priori, qu'un champ magnétique parallèle aux racines du végétal produise les mêmes effets biologiques qu'un champ perpendiculaire.

Dans le cas d'un pot du type de celui de la figure 1, on a observé que le champ magnétique est plus intense dans un pot en fonte que dans un pot en terre dans une zone comprise entre deux et six centimètres au-dessus de l'aimant 4 tandis que dans la zone située au-delà de six centimètres, le champ magnétique a localement la même intensité et le même sens dans les deux cas.

Dans un récipient conforme à l'invention, c'est donc bien au niveau des racines que se développe le champ magnétique le plus dense.

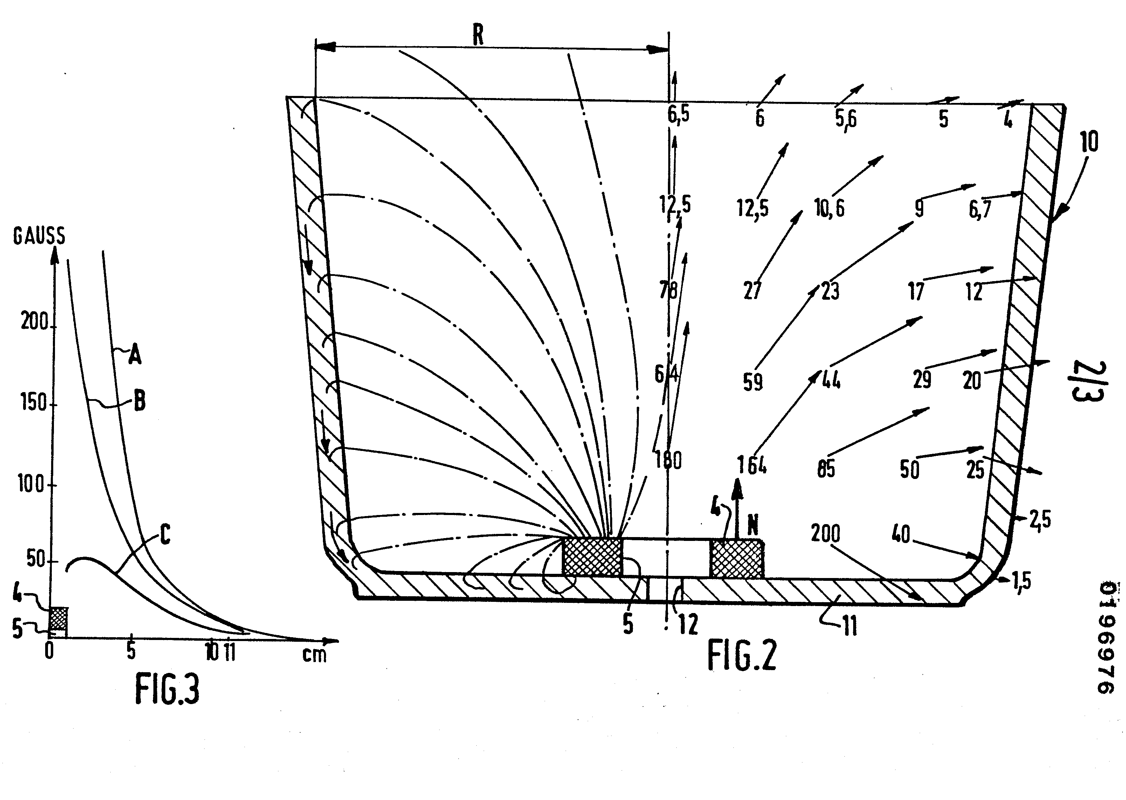

Sur la figure 2, on a représenté un autre récipient conforme à l'invention, en fonte, mais de forme plus large et correspondant à ce qu'on nomme généralement un bac plutôt qu'un pot.

Le pot de la figure 1 a un rayon r nettement inférieur au rayon R du bac 10 de la figure 2. L'aimant 4 est identique à celui de la figure 1, il présente donc, lui aussi, un passage central 5 situé en regard du trou 30 que comporte le fond 20.

Dans les deux cas, pot de la figure 1 et bac de la figure 2, les lignes de champ ne sortent pratiquement pas à l'extérieur du récipient puisqu'elles sont canalisées par les parois 1 et 10 et, dans les deux cas également, le volume situé au-delà de quatre centimètres au-dessus de l'aimant 4 est aimanté de la même manière.

Dans la zone située entre l'aimant 4 et lui-même et quatres centimètres au-dessus de lui, le champ magnétique est plus important dans le cas du pot de la figure 1 que dans le cas du bac de la figure 2.

Ce phénomène est lié à la différence de distance entre l'aimant 4 et les parois latérales du récipient car l'influence de la paroi 1 est rapidement prépondérante dans le cas de la géométrie du pot de la figure 1 et, ici encore, cela résulte de la composante horizontale.

Sur la figure 3, on a représenté des courbes qui donnent en Gauss la variation de l'amplitude du champ magnétique en fonction de la hauteur du point considéré mesuré en centimètres, le fond du récipient étant considéré au zéro du système de coordonnées où l'on a schématisé la présence de l'aimant 4 pour fixer les idées.

Les mesures qui ont permis de tracer ces courbes on été effectuées avec un récipient du genre de celui de la figure 1 ayant une hauteur de onze centimètres, muni d'un aimant central 4, développant un champ d'environ deux cent cinquante Gauss, à proximité immédiate de son centre.

La courbe A correspond à la variation du champ magnétique mesurée le long de la verticale considérée au centre du récipient. La courbe B correspond à la variation du champ magnétique sur une verticale située à une distance de trente cinq millimètres du centre et enfin la courbe C montre la variation du champ magnétique sur une verticale située à cinquante cinq millimètres du centre.

On voit que le champ magnétique se développe encore faiblement au-dessus du bord du récipient en son centre et encore plus faiblement au droit des lignes situées respectivement à trente cinq et cinquante cinq millimètres du centre.

Ces courbes confirment les shémas des figures 1 et 2 sur lesquelles on voit que les lignes de champ forment un faisceau divergeant et se referment dans la paroi du récipient.

Le champ magnétique est pratiquement nul à l'extérieur et s'établit environ à environ cinq à six Gauss un peu au-dessus du récipient.

Ces courbes montrent que la décroissance du champ magnétique avec l'altitude est rapide et, en fonction de la distance à l'axe, le faisceau est plus ou moins dressé selon que le diamètre du récipient est petit ou grand.

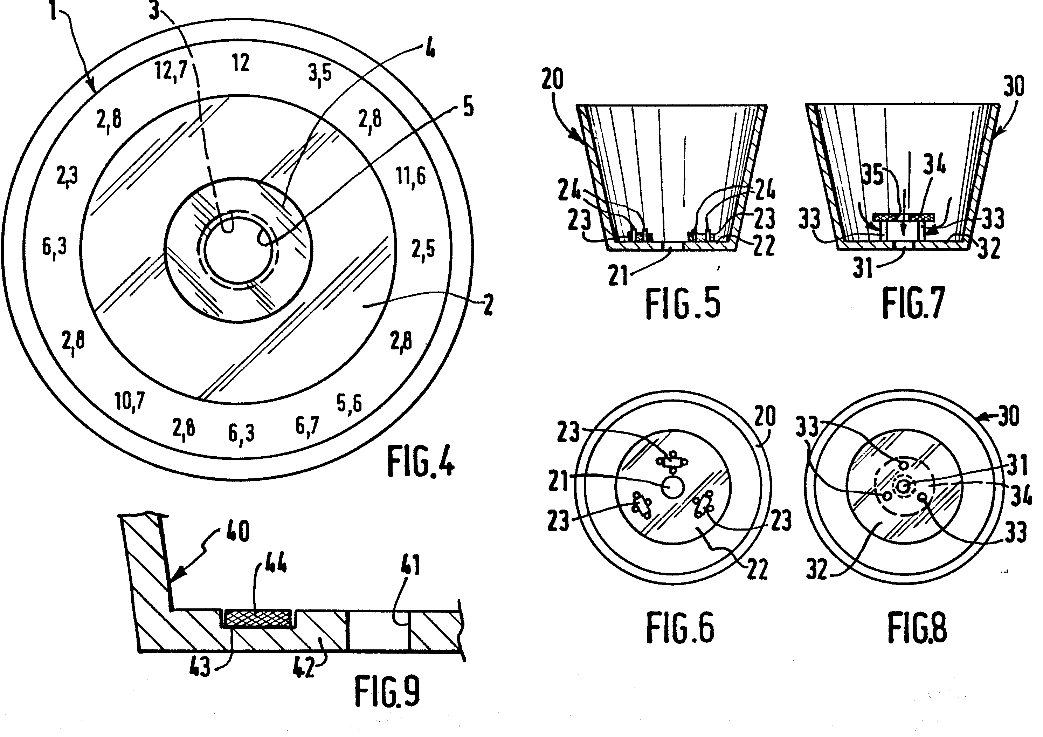

En se reportant à la figure 4, on voit une vue en plan du récipient de la figure 1 et on a porté sur la périphérie du bord les valeurs du champ magnétique qui montrent que, d'une manière générale, le champ est tout à fait symétrique et de révolution autour de l'axe du récipient.

On note des différences de valeurs assez sensibles qui résultent de l'imperfection du récipient ayant servi aux expériences car celui-ci a été obtenu avec un moule relativement grossier, laissant subsister des variations de l'épaisseur de la paroi 1, un certain manque d'homogénéité de l'alliage de fonte utilisé pouvant également être la cause de la dispersion des résultats.

Il est néammoins clair pour l'homme de métier qu'en utilisant un récipient obtenu avec un alliage tout à fait homogène et dans des conditions industrielles normales, aucune raison scientifique ne permet de douter que le champ magnétique se distribue de manière régulière et homogène autour de l'axe du récipient, c'est-à-dire autour de l'axe de l'aimant 4.

Les essais effectués avec des végétaux plantés dans des récipients conformes à l'invention ont donné des résultats intéressants et inattendus bien que l'on sache depuis longtemps que le magnétisme a un effet sur les organismes vivants.

Outre les effets du champ magnétique proprement dits, connus en eux-mêmes depuis longtemps, la combinaison d'un champ magnétique avec un récipient ferromagnétique et imperméable permet de donner aux racines du végétal et à la partie de celui-ci la plus proche du niveau de la motte de terre, un environnement magnétique constant, bien réparti et d'intensité convenable, pratiquement sans déperdition.

Le fait que le récipient soit imperméable permet de prévoir un arrosage sensiblement moins abondant que ce qui serait nécessaire avec un récipient poreux, par exemple en terre, et l'on a mesuré, en faisant des comparaisons avec des récipients en terre et même en plasique, que l'arrosage dans un récipient en fonte doit être deux à trois fois moins abondant, grâce à l'absence totale d'évaporation latérale et aux réactions biologiques des végétaux à la chaleur emmagasinée dans les parois du récipient.

Sur l'ensemble des lots de plantes disposées dans des récipients en fonte, on constate que les plantes ont un très bon comportement et toujours supérieur aux témoins placés dans des récipients en terre ou en plastique.

Les exemples donnés ci-après montrent que les résultats de comparaisons effectuées entre des végétaux plantés dans des pots en terre, des pots en plastique et des pots en fonte, sans aimant et avec aimant, conduisent à la conclusion que la combinaison des effets magnétiques et d'un récipient ferromagnétique enfermant le champ magnétique à l'intérieur de lui-même ont un effet marqué sur la croissance, la santé et la robustesse des végétaux.

Ainsi, par exemple, après avoir disposé de la terre dans un pot en terre sans aimant, dans un pot en fonte avec un aimant orienté comme indiqué sur les figures 1 et 2 et dans un pot en fonte avec un aimant à polarité contraire à celle de ce qui est indiqué sur ces figures, on a planté dans chacun de ces pots des Scheffleras à raison d'un plant par pot.

Après trois semaines, le nombre de feuilles était de un et demi dans le pot en terre sans aimant, deux dans le pot en fonte avec l'aimant disposé comme indiqué sur les figures 1 et 2 et un demi seulement dans un pot en fonte avec un aimant ayant une polarité inverse de celle représentée sur les figures 1 et 2.

L'aspect du feuillage était bon dans les trois cas et l'aspect racinaire était peu important dans le pot en terre, moyennement important dans le pot en fonte avec un aimant disposé comme indiqué sur les figures 1 et 2, et plus important dans le pot en fonte avec un aimant disposé selon une polarité inverse.

Quant à la qualité des racines, il faut souligner qu'elle n'était que moyenne dans le pot en terre, assez bonne dans le pot en fonte avec un aimant disposé comme indiqué sur les figures 1 et 2, et particulièrement bonne dans le pot en fonte avec un aimant disposé selon une polarité contraire.

Les mêmes essais avec des plantes de la même espèce ont été réalisés avec un aimant plus fort que le précédent et les résultats ont été analogues à une exception importante près selon laquelle le feuillage du végétal planté dans le pot en fonte ayant un aimant disposé selon la polarité inverse de celle indiquée sur les figures 1 et 2 était jaunissant tandis que la qualité de ses racines était particulièrement bonne.

Cette constatation contradictoire conduit à penser qu'un champ magnétique trop puissant privilégie les racines au détriment du feuillage et a sur ce dernier un effet défavorable, de sorte que le champ magnétique doit être maintenu dans des valeurs qui sont de l'ordre de celles indiquées ici et de préférence inférieure plutôt que supérieures.

Pendant trois mois d'hiver, avec des températures particulièrement rigoureuses c'est-à-dire de l'ordre de quinze degrés centigrades au-dessous de zéro le matin, des essais ont été conduits avec des Primevères Hortensis, des Coleus d'appartement, des Fuchsias Magellanica, des Chlorophytum Mediopictum, des Tradescantias Zebrina, des Cupheas Ignea et des Ficus Elastica Variegata dans des pots en terre cuite, des pots en fonte sans aimant et des pots en fonte avec aimant orienté comme indiqué sur les figures 1 et 2.

Toutes ces espèces avaient été choisies en raison de leur capacité à supporter les températures basses d'un hiver moyen dans une serre dite froide mais dans une région située au Sud-Ouest de la France, c'est-à-dire dans une zone très tempérée, ne nécessitant qu'un léger chauffage d'appoint pour maintenir les végétaux hors gel.

Toutes les plantes ont été mises en pot le même jour dans le même substrat et ont reçu des arrosages identiques (malgré les remarques faites ci-dessus à ce sujet, afin de n'accepter aucune différence de paramètres).

Tant que la température extériere est restée dans des limites raisonnables, toutes les plantes avaient une bonne végétation avec toutefois une qualité un peu supérieure pour celles cultivées dans les pots en fonte car la terre y conserve mieux l'humidité que dans des pots en terre cuite et l'inertie thermique de la fonte permet de conserver pendant la nuit les calories accumulées dans la journée.

Lorsque la température extérieure est descendue au-delà de dix degrés centigrades au-dessous de zéro, les Coleus, les Fuchsias et les Cuffeas étaient gelés même dans les pots en fonte.

Mais, en revanche, le Chlorophytum placé dans un pot en fonte gardait toute sa vigueur malgré le froid intense, alors que le Chlorophytum placé dans un pot de terre s'est effondré en quarante huit heures.

Le Tradescantia Zebrina planté dans un pot en fonte avec aimant est demeuré normal alors que celui placé dans un pot en terre ainsi que celui placé dans un pot en plastique ont été gelés également en quarante huit heures.

Lorsque la température extérieure a commencé à remonter, la situation est restée identique à celle ci-dessus c'est-à-dire que le Chlorophytum et le Tradescantia Zebrina ont parfaitement survécu à une vague de froid particulièrement importante et ce résultat est totalement impossible à atteindre avec des pots en terre ou des pots en plastique ou même avec des pots en fonte sans aimant.

Il faut souligner que les végétaux plantés dans des pots en fonte sans aimant ont gelé tandis que ceux placés dans des pots en fonte avec aimant ont résisté, ce qui est particulièrement frappant pour un végétal tel que le Ficus Elastica Variegata qui a résité au froid intense de quinze degrés centigrades au-dessous de zéro pendant plus d'une semaine.

Des essais ont également été conduits en prévoyant pour les récipients en fonte des couleurs différentes et l'on a remarqué que les végétaux placés dans des pots en fonte de couleur blanche résistaient moins longtemps que les végétaux de la même espèce plantée dans des récipients de couleur noire, ce qui tend à montrer qu'aux effets de l'inertie thermique propre à la fonte s'ajoutent les propriétés d'absoption calorifique des corps de couleur foncée.

Naturellement, un récipient conforme à l'invention doit, en dehors de ses caractéristiques propres, permettre les soins habituels que nécessitent les végétaux notamment à l'égard du drainage de l'eau excédentaire.

Dans le cas d'un aimant torique comme ceux représentés sur les figures 1 et 2, l'eau peut s'écouler par le passage central 5 de cet aimant mais l'homme de métier sait que généralement les possesseurs de végétaux arrosent ceux-ci avec des quantités d'eau trop importantes et ce défaut peut se trouver accentué avec des pots imperméables en fonte comme ceux de la présente invention.

Le drainage peut être contrarié dans le fond extrême de la motte de terre, c'est-à-dire sur la hauteur correspondant à l'épaisseur de l'aimant 4 et cela en raison de l'adhérence de l'aimant sur le fond du récipient.

Pour éviter cela, on peut agir comme représenté sur les figures 5 et 6 où l'on voit que dans un pot ayant une paroi 20 et représentant un trou central 21 au centre du fond 22, on dispose trois aimants 23 autour du trou 21 afin que l'eau puisse couler aisément jusqu'au trou 21 entre les aimants 23.

Naturellement, le nombre d'aimants peut être quelconque et même ramené à un seul car l'excentration de celui-ci n'a pas d'effet sensible sur la répartition du champ magnétique dans un récipient suffisamment large.

Pour que les aimants 23 ne se déplacent pas lorsque l'on manipule le récipient 20 et lorsqu'on y place de la terre, on peut prévoir, comme représenté sur les figures 5 et 6, des reliefs 24 maintenant les aimants 23 par leur périphérie.

Une autre solution à ce problème est représentée sur les figures 7 et 8 où l'on voit un récipient ayant une paroi 30 et présentant un trou de drainage 31 au centre du fond 32, celui-ci comportant trois reliefs 33 sur lesquels on pose un aimant torique 34 ayant un trou central 35.

On comprend que, de cette manière, l'eau de drainage peut passer facilement sous l'aimant 34 et entre les reliefs 33 et, bien entendu, peut également emprunter le trou 35 de l'aimant 34.

La figure 9 représente une partie seulement d'un récipient conforme à l'invention comprenant une paroi 40 et un trou de drainage 41 placé au centre du fond 42, celui-ci comportant au moins un logement 43 dont les dimensions sont établies de telle manière qu'il puisse recevoir un aimant 44 sans que celui-ci crée un obstacle au libre écoulement de l'eau depuis la périphérie du récipient jusqu'au trou central 41.

Dans ce cas, comme dans celui des figures 5 et 6, le nombre d'aimants est quelconque mais peut avantageusement être de trois répartis symétriquement par rapport à l'axe du récipient.

***

# RÉVENDICATIONS

1 - Récipient pour la culture de végétaux du type comprenant d'une part un fond (2-11-22-32-42) traversé par un trou de drainage (3-12-21-31-41) et d'autre part au moins une paroi latérale fermée sur elle-même, (1-10-20-30-40) réalisé en un matériau de type magnétique tel que l'acier, la fonte et analogue, caractérisé en ce qu'il est imperméable et est associé à au moins un aimant permanent (4-23-34-44) placé sur le fond (2-11-22-32-42) et sans contact avec la ou les paroi(s) latérale(s) (1-10-20-30-40).

2 - Récipient selon la revendication 1, caractérisé en ce qu'il est de couleur sombre, notamment noire, pour favoriser l'absorption et la rétention de chaleur.

3 - Récipient selon la revendication 1, caractérisé en ce que l'aimant (4) est torique et placé sur le fond (2-11) du récipient de telle manière que le passage central (5) du tore soit en regard du trou de drainage (3-12).

4 - Récipient selon la revendication 1, caractérisé en ce qu'il est associé à deux aimants (23) au moins qui sont placés près du centre du fond (2) mais à l'extérieur du contour du trou de drainage (21).

5 - Récipient selon la revendication 1, caractérisé en ce qu'il comporte au moins un logement (43) pour un aimant (44).

6 - Récipient selon la revendication 1, caractérisé en ce que le fond (32) comporte des reliefs (33) sur lesquels un aimant (34) au moins doit être posé pour se trouver un peu au-dessus du fond (32).

****

0196976

r
2,7
2,5
2
0,7
1
1
5,1
4,6
4
2,5
1,5
4,5
11
10
8
0,5
28
27
26
01
73
75
74
50
215
30
250
1,5
4
N
350
2
2
79
5
3
2
1,5

FIG.1

2/3
R
6,5
6
5,6
5
4
10
12,5
12,5
10,6
9
6,7
78
27
23
17
12
64
59
44
29
20
180
164
85
50
25
2,5
4
N
200
40
1,5
5
12
11
GAUSS
200
150
100
50
A
B
C
4
5
0
5
10
11
cm

FIG.2

FIG.3

FIG.4

FIG.5

FIG.6

FIG.7

FIG.8

FIG.9

Office européen des brevets

# RAPPORT DE RECHERCHE EUROPEENNE

0196976

Numero de la demande

EP 86 40 0697

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | DE-U-8 330 828 (STRAHL) * En entier * | 1,3-5 | A 01 G 7/04 |
| Y | | 2,6 | |
| | --- | | |
| Y | GB-A-2 073 567 (BELLAPLAST GmbH) * Revendication 2; figure 2 * | 2 | |
| | --- | | |
| Y | DE-C- 187 563 (RAMCKE) * En entier * | 6 | |
| | --- | | |
| A | DE-A-2 219 688 (ELECTRO CULTURE CORP.) * Page 5, ligne 5 - page 10, ligne 8; revendications 1-3 * | 1 | |
| | --- | | DOMAINES TECHNIQUES RECHERCHES (Int Cl 4) |
| A | FR-A- 958 459 (PONT) * En entier * | 1 | A 01 G<br>A 01 M |
| | ----- | | |

Le présent rapport de recherche a été établi pour toutes les revendications

| Lieu de la recherche | Date d'achèvement de la recherche | Examinateur |
|---|---|---|
| LA HAYE | 10-06-1986 | MEINDERS H. |

CATEGORIE DES DOCUMENTS CITES

X particulièrement pertinent à lui seul
Y particulièrement pertinent en combinaison avec un autre document de la même catégorie
A : arrière-plan technologique
O : divulgation non-écrite
P : document intercalaire
T théorie ou principe à la base de l'invention
E : document de brevet antérieur, mais publié à la date de dépôt ou apres cette date
D cité dans la demande
L cité pour d autres raisons
& : membre de la même famille, document correspondant